# EUROPEAN PATENT SPECIFICATION

(11) **EP 0 270 800 B1**
(45) Date of publication and mention of the grant of the patent: **04.05.1994**
(21) Application number: 87115696.4
(22) Date of filing: 20.06.1984
(51) Int. Cl.: F28D 15/02, F23J 15/00

(54) **Heat exchanger**
Wärmetauscher
Echangeur de chaleur

(30) Priority: 21.06.1983 JP 110233/83; 21.06.1983 JP 110235/83; 22.06.1983 JP 94949/83 U
(43) Date of publication of application: 15.06.1988
(62) Divisional of application: 84107107.9
(73) Proprietor: BABCOCK-HITACHI KABUSHIKI KAISHA, Tokyo 100 (JP)
(72) Inventor: Kotaka, Ikuo, Kamo-gun Hiroshima-ken (JP)
(74) Representative: Beetz & Partner Patentanwälte

(56) References cited:
- WO-A-83/00380
- DE-C- 734 304
- FR-A- 771 878
- PATENT ABSTRACTS OF JAPAN, vol. 5, no. 33 (M-57)[705], 28th February 1981; & JP-A-55 158 493 (BABCOCK HITACHI K.K.) 09-12-1980
- PATENT ABSTRACTS OF JAPAN, vol. 5, no. 29 (M-56)[701], 21st February 1981; & JP-A-55 155 187 (BABCOCK HITACHI K.K.) 03-12-1980
- PATENT ABSTRACTS OF JAPAN, vol. 5, no. 29 (M-56)[701], 21st February 1981; & JP-A-55 155 196 (BABCOCK HITACHI) 03-12-1988
- PATENT ABSTRACTS OF JAPAN, vol. 2, no. 2, 6th January 1978, page 6252 M 77; & JP-A-52 112 847 (DAIKIN KOGYO) 21-09-1977
- SOVIET INVENTIONS ILLUSTRATED, week C08, 2nd April 1980, class Q7, section PQ,abstract no. 14428C/08, Derwent Publications Ltd, London, GB; & SU-A-667 790 (HEAT NASS TRANSFER) 25-06-1979
- PATENT ABSTRACTS OF JAPAN, vol. 6, no. 23 (M-111)[901], 10th February 1982;& JP-A-56 142 388 (MITSUI) 06-11-1981
- PATENT ABSTRACTS OF JAPAN, vol. 4, no. 3 (M-87), 11th January 1980; & JP-A-54 140 254 (TOKYO SHIBAURA) 31-10-1979
- PATENT ABSTRACTS OF JAPAN, vol. 2, no. 132, 4th November 1978, page 4352 M 78; & JP-A-53 101 758 (HITACHI) 05-09-1978

## Description

### BACKGROUND OF THE INVENTION

### FIELD OF THE INVENTION:

The present invention relates to a heat exchanger of the kind referred to in the preamble portion of patent claim 1. Such a heat exchanger is known from one embodiment shown in JP-A-55-158 493.

### DESCRIPTION OF THE PRIOR ART

Various types of heat exchanger have been used so as to heat two or more fluids to be heated (lower temperature fluid) by means of one heating fluid (higher temperature fluid). A conventional heat exchanger, for example a heat storage rotary type heat exchanger, a multi-tubular pipe type heat exchanger or plate type heat exchanger among such heat exchangers each necessitates a division of a heating fluid flow into branch flows corresponding to the number of the fluids to be heated, whereby a heat exchange is effected between the branched heating fluid flow and the corresponding fluid to be heated, or necessitates a provision of heat exchangers within the heating fluid each of which heats the corresponding fluid to be heated.

Under the above-mentioned circumstances, a heat exchanger has been proposed, which incorporates a heat pipe apparatus including an evaporator pipe section disposed within the flow of a heating fluid, a condenser pipe section is disposed within the flow of a fluid to be heated and located in series and spaced away from the evaporator pipe section, and passage means for connecting both pipe sections to each other. Generally, in this type of heat pipe apparatus which is so called the separate type heat pipe apparatus, it is necessary to provide therein sets of relief valves and non-condensable gas separators. However, as the number of the condenser pipe sections increases, the number of the sets of relief valves and non-condensable gas separators proportionally increases, too. Thus, the number of necessary parts and the cost for the heat exchanger increase.

Further, in the above-mentioned construction wherein both pipe sections are arranged in series, a difference between temperatures of the heating fluid and the heated fluid passing from through the condenser pipe section becomes smaller, so that it is required to increase the quantity of heat being exchanged at the upstream side of the fluid.

JP-A-55-158 493 describes as one embodiment a heat exchanger incorporating a heat pipe apparatus, said heat pipe apparatus comprising: a plurality of evaporative pipe groups disposed within a flow of a heating fluid, a plurality of condenser pipe groups located away from said evaporative pipe groups and disposed within a flow of fluid to be heated and passage means for connecting said evaporative pipe groups with said condenser pipe groups and for circulating therethrough a working medium between said both pipe groups.

### SUMMARY OF THE INVENTION

An object of the present invention is to provide a heat exchanger incorporating a heat pipe apparatus, which has no such disadvantages as mentioned above, and which is improved in respect of corrosion resistance.

The invention will be described in more detail below in connection with the accompanying drawings.

### BRIEF DESCRIPTION OF THE DRAWINGS:

Fig. 1 shows a construction of a conventional separate type heat pipe apparatus;
Fig. 2 is a schematic illustration of the apparatus shown in Fig. 1;
Fig. 3 is a schematic illustration of the conventional separate type heat pipe apparatus arranged to heat two fluids;
Fig. 4 is a diagram showing the variation in temperature between the fluids in the case of the apparatus shown in Fig. 3;
Fig. 5 shows a construction of the heat pipe apparatus according to a first embodiment of the present invention applied to a combustion plant unit;
Fig. 6 shows a modification of the heat pipe apparatus shown in Fig. 5.

### DETAILED DESCRIPTION OF THE PREFERRED EMBODIMENTS:

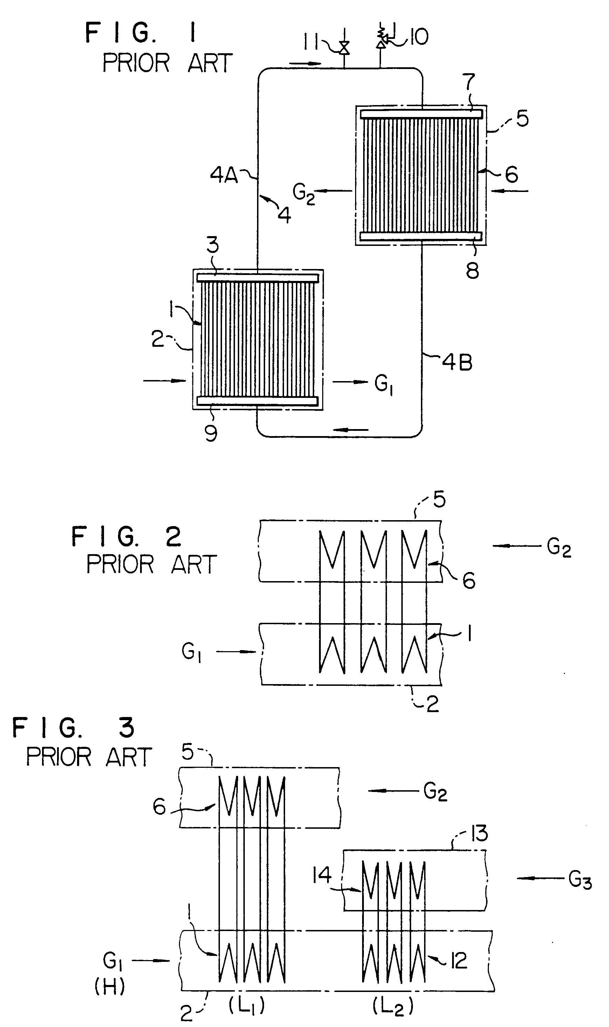

Fig. 1 shows a structure of the conventional separate type heat pipe apparatus. In this Figure, the reference numeral 1 denotes an evaporative pipe group which is disposed within a duct 2 through which a heating fluid (such as, for example, a gas) G1 passes. A medium in the evaporative pipe group 1 is heated by the heating fluid G1 to become a vapor. The medium vapor is carried from an upper header 3 of the evaporative pipe group 1 through a passage section 4A of a passage 4 to an upper header 7 of a condenser pipe group 6 located within a duct 5 permitting therethrough the flow of a fluid (such as, for example, a gas) G2 to be heated. The medium vapor from the evaporative pipe group 1 is condensed within the condenser pipe group 6 and is allowed to flow from a lower header 8 thereof into a lower header 9 of the evaporative pipe group 1 through a passage section 4B of the passage 4. Since the lower header 8 of the condenser pipe group 6 is located at a higher level than the lower header 9 of the evaporative pipe group 1 is, the medium is put in natural circulation. A relief valve 10 and a non-condensable gas separator 11 are provided in the passage section 4A of the passage 4.

Fig. 2 illustrates this structure.

Fig. 3 illustrates a heat pipe apparatus arranged to transmit the heat of a high temperature gas G1 (such as, for example, a combustion gas of a furnace) passing through the duct 2 to two fluids G2 (for example, an air for a combustion) and G3 (for example, a fuel gas). Within the duct 2, two different evaporative pipe groups 1 and 12 are respectively disposed. Within the ducts 5 and 13 through which the fluids G2 and G3 pass respectively, the condenser pipe groups 6 and 14 associated with the evaporative pipe groups 1 and 12 are respectively disposed. In this case, six relief valves, the number of which is the same as that of the condenser pipe groups, are necessary, and six non-condensable gas separators are also required. In consequence, the number of necessary parts increases, whereby the cost also increases correspondingly.

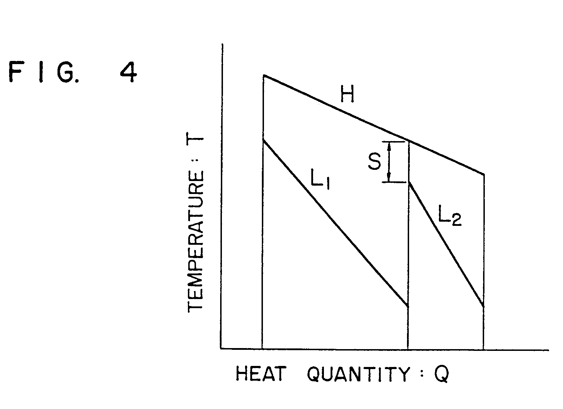

Furthermore, in the above mentioned series arrangement of the pipe groups, the difference in temperature between the higher temperature fluid and each lower temperature fluid at the outlet disadvantageously becomes small as shown in Fig. 4. As a result, it is necessary to make the quantity of heat to be exchanged at the upstream side large.

In Fig. 5, there is shown a first embodiment of the present invention which is applied to a combustion plant unit for prevention of white fume generation by means of raising the temperature of a desulfurized exhaust gas from the combustion apparatus. In this Figure, the exhaust gas from a combustion apparatus 31, e.g. a boiler, flows as a higher temperature exhaust gas G1 through a dust collector 32 into a duct 15 within which are disposed a plurality of evaporative pipe groups 16A to 16C, and in which a heat exchange is performed. Thereafter, the resultant exhaust gas flows into a desulfurizing device 33 and is cooled by a water spray in a cooling tower 34, and is cleaned by a spray of a liquid containing CaCO₃ in an absorbing tower 35. The resultant exhaust gas, thereafter, flows through a demister element 36, and then flows as a lower temperature gas G2 into a duct 19 within which are disposed a plurality of condenser pipe groups 20A to 20C and is heated therein and is then exhausted through a chimney 37.

In this case, when the temperature of the condenser pipe group 20A as well as the temperature of the gas G2 is lower, the exhaust gas contains vapor and thus is discharged through the chimney 37 as white fume. This is not preferable from the point of view of the environmental pollution.

The evaporative pipe group 16A is locacted at a place of the lowest temperature (the most downstream side) with respect to the exhaust gas G1, while the condenser pipe group 20A is located at a place of the lowest temperature (the most upstream side) with respect to the exhaust gas G2. Accordingly, acid mist can attach onto the pipes and dust, i.e., particles of, for example, CaSO₄, CaCO₃, etc. are carried into a gap between the pipe fins to jam it whereby heat transfer efficiency decreases and, besides, the evaporative pipe comes to be corroded rapidly. Same phenomenon can be found in other condenser pipe groups 20B, 20C, etc. Such phenomenon can be avoided by replacing all pipes of the condenser pipe groups 20A to 20C by bare pipes having no fin, but many bare pipes, the number of which is four to five times as great as that of the finned pipes otherwise required become necessary from the viewpoint of heat transfer area. Accordingly, as a countermeasure, another evaporative pipe group 16D is disposed at an uppermost stream side with respect to the flow of the exhaust gas G1, whereby a high temperature working medium vapor (for example, 124 °C, 2.3 kg/cm²) is generated. This high temperature working medium vapor is sent to another condenser pipe group 20D disposed at the uppermost stream side with respect to the flow of the low temperature gas G2. This means that no mist condenses on the condenser pipe group 20D. In this case, if all condenser pipes have to be bare pipes made of a material having corrosion resistance (for example, SUS stainless steel) and a smooth surface, a remarkable effect is obtained in regard to preventions of mist condensation and of pipe corrosion.

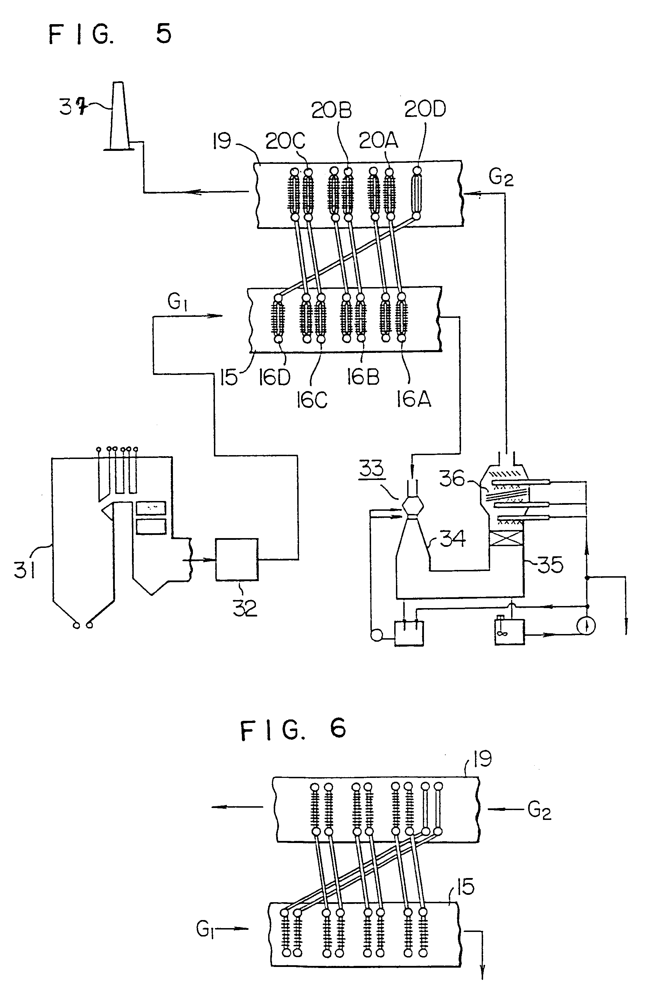

A plurality of loops for evaporation of mist may be provided as shown in Fig. 6. Further, where the inlet temperature of high temperature side is high and as a result the temperature of the mist evaporation loop or loops becomes too high, whereby it can be considered as being possible that stress corrosion takes place due to, for example Cl in the mist, the temperature of the mist evaporation loop can be set at a suitable value by selecting the high temperature fluid side pipe group position for the mist evaporation loop to be, for example, 20B, 20C, etc.

Further, this means can be applied not only to the transmission of latent heat but also to the transmission of sensible heat.

In this embodiment, by providing a high temperature pipe group for evaporation of mist, it is possible to restrict the extent of corrosion by mist, the extent of attachment of dust, etc. narrowly. Further, by using bare pipes for the condenser pipes, it is also possible to prevent the attachment of dust easily to perform a continuous operation of the apparatus, and to make the time required for the maintenance and inspection short.

In the previous embodiments of the invention the evaporative pipe group 16 is disposed at a lower level than the condenser pipe group 20. Accordingly, the working medium vapor generated in the evaporative pipe group 16 rises upwards toward the condenser pipe groups 20 and is to be condensed. The condensed working liquid medium in the condenser pipe group 20 flows downwards toward the evaporative pipe group 16. Thus, the working medium can be naturally circulated between the evaporative pipe group and the condenser pipe group through the passage 18. According to the installing conditions, however, it is not always possible to locate the pipe groups in the above mentioned manner. Namely, the evaporative pipe group may be disposed at a higher level than the condenser pipe group. In such a case, it becomes impossible to circulate the working medium naturally and to make a heat exchange unless the working medium is forcedly circulated by means of any suitable means.

## Claims

1. A heat exchanger incorporating a heat pipe apparatus, said heat pipe apparatus comprising:
a plurality of evaporative pipe groups (16A-16D) disposed within a flow of a heating fluid (G1);
a plurality of condenser pipe groups (20A-20D) located away from said evaporative pipe groups and disposed within a flow of fluid to be heated (G2); and
passage means for connecting said evaporative pipe groups with said condenser pipe groups and for circulating therethrough a working medium between said both pipe groups;
**characterized** in that
one or more of said evaporative pipe groups, which are disposed in an upper stream side of the flow of the heating medium, are connected to the respective one or more of said condenser pipe groups which are disposed at the most upstream side of the fluid to be heated,
said latter condenser pipe group or groups being formed of bare pipes, and the remainder of said condenser pipe groups and all evaporative pipe groups (16A-16D) being formed of finned pipes.

2. A heat exchanger as claimed in claim 1, wherein said bare pipes are made of anticorrosive material.

## Patentansprüche

1. Wärmetauscher mit einer Wärmeleitungsrohranordnung, wobei die Wärmeleitungsrohranordnung aufweist:
- mehrere Verdampferrohrgruppen (16A-16D) , die im Strom eines Heizfluids (G1) angeordnet sind,
- mehrere Kondensorrohrgruppen (20A-20D) , die von den Verdampferrohrgruppen entfernt in einem Strom von zu heizendem Fluid (G2) angeordnet sind; und
- Verbindungsmittel zum Verbinden der Verdampferrohrgruppen mit den Kondensorrohrgruppen und um durch diese ein Arbeitsmedium zwischen den beiden Rohrgruppen zirkulieren zu lassen,
**dadurch gekennzeichnet,**
daß eine oder mehrere der Verdampferrohrgruppen, welche stromauf des Flusses des Heizmediums angeordnet sind, mit der entsprechenden oder mehreren der Kondensorrohrgruppen verbunden ist bzw. sind, die in der weitest stromauf gelegenen Lage des aufzuheizenden Fluids angeordnet sind, wobei letztere Kondensorrohrgruppe bzw. Gruppen aus blanken Rohren bestehen und wobei die Verdampferrohrgruppen aus mit Kühlrippen versehenen Rohren bestehen.

2. Wärmetauscher nach Anspruch 1,
dadurch gekennzeichnet,
daß die blanken Rohre aus einem nicht korrosiven Material bestehen.

## Revendications

1. Echangeur de chaleur comprenant un agencement de tubes d'échange de chaleur, ledit agencement de tubes d'échange de chaleur comprenant :
- une pluralité de groupes (16A-16D) de tubes évaporateurs disposés dans un écoulement de fluide de chauffage (G1) ;
- une pluralité de groupes (20A-20D) de tubes condenseurs situés à distance desdits groupes de tubes évaporateurs et disposés dans un écoulement de fluide (G2) à chauffer ; et
- des moyens de passage pour raccorder lesdits groupes de tubes évaporateurs auxdits groupes de tubes condenseurs et pour permettre la circulation d'un fluide de travail entre les deux groupes de tubes précités ;
**caractérisé** en ce que :
un ou plusieurs desdits groupes de tubes évaporateurs, qui sont disposés sur le côté d'amont de l'écoulement du fluide de chauffage, sont raccordés à un ou plusieurs groupes correspondants parmi lesdits groupes de tubes condenseurs qui sont disposés sur le côté le plus en amont du fluide à chauffer,
ce ou ces derniers groupes de tubes condenseurs étant des tubes simples et le restant desdits groupes de tubes condenseurs ainsi que tous les groupes (16A-16D) de tubes évaporateurs étant formés par des tubes à ailettes.

2. Echangeur de chaleur selon la revendication 1, dans lequel lesdits tubes simples sont formés d'un matériau anti-corrosif.
